# EUROPÄISCHE PATENTSCHRIFT

(11) **EP 1 436 765 B1**
(45) Veröffentlichungstag und Bekanntmachung des Hinweises auf die Patenterteilung: **15.11.2006**
(21) Anmeldenummer: 02801891.9
(22) Anmeldetag: 16.10.2002
(51) Int. Cl.: G06K 7/00, G06K 19/077, H01R 12/22, H05K 5/02, H01R 13/115

(54) **ADAPTER ZUM KONTAKTIEREN VON CHIPKARTEN**
ADAPTER FOR CONTACTING SMART CARDS
ADAPTATEUR POUR LA MISE EN CONTACT DE CARTES A PUCE

(30) Priorität: 19.10.2001 DE 20117188 U
(43) Veröffentlichungstag der Anmeldung: 14.07.2004
(73) Patentinhaber: STOCKO Contact GmbH & Co. KG, 42327 Wuppertal (DE)
(72) Erfinder: KLATT, Dieter, 42489 Wülfrath (DE); Bäcker, Arnd, 53640 Hellenthal (DE); BREUER, Walter, 53949 Berk (DE)
(74) Vertreter: Stenger, Watzke & Ring
(86) Internationale Anmeldenummer: PCT/EP2002/011558
(87) Internationale Veröffentlichungsnummer: WO 2003/036551

(56) Entgegenhaltungen:
- DE-A- 3 902 230
- DE-A- 4 310 517
- DE-A- 19 533 569
- DE-A- 19 925 146
- DE-U- 29 505 678
- US-A- 5 846 092
- US-A- 6 015 092
- US-B1- 6 272 017
- PATENT ABSTRACTS OF JAPAN vol. 1999, no. 13, 30. November 1999 (1999-11-30) -& JP 11 213110 A (TDK CORP), 6. August 1999 (1999-08-06)

## Beschreibung

Die Erfindung betrifft einen Adapter zum Kontaktieren von Chipkarten, insbesondere mit einem nach dem PCMCIA-Standard genormten Anschluß eines Datenverarbeitungsgerätes, mit einem steckkartenförmigen Gehäuse, welches einen an einer Stirnseite in einen Aufnahmekanal mündenden Einschubschlitz für die Aufnahme einer Chipkarte und ein an der gegenüberliegenden Stirnseite angeordnetes Anschlußfeld aufweist, und mit einer mit dem Anschlußfeld elektrisch verbundenen Leiterplatte, welche sich parallel zum Aufnahmekanal erstreckt und mit Kontaktelementen zum Kontaktieren der Chipkarte versehen ist.

Unter einer Chipkarte im voranstehenden Sinne werden kartenförmige Trägerelemente elektronischer Bauteile, insbesondere von Mikroprozessoren, auf denen verschiedene abrufbare Informationen gespeichert werden können, verstanden. Derartige Chipkarten sind insbesondere im Bereich der Computertechnologie anzutreffen und erfreuen sich einer immer stärker werdenden Verbreitung im Zusammenhang mit der Authentifikation von Subjekten. Neben dieser Verwendung als Identitätskarte für z. B. die Bedienung von Zugangs-Kontrollsystemen, werden Chipkarten derzeit zunehmend auch im bargeldlosen Zahlungsverkehr eingesetzt, wo sie beispielsweise bei Kreditkarten oder im Rahmen von POS-Systemen die Magnetstreifenkarte ablösen.

Zum Lesen einer Chipkarte sind als Kontaktiereinheit ausgebildete Lesegeräte bekannt, die in Form eines Adaptersystems es beispielsweise ermöglichen, eine Chipkarte an einen nach PCMCIA-Standard genormten Anschluß eines Datenverarbeitungssystems anzuschließen. Die im Stand der Technik hierzu bekannten Adapter weisen eine PCMCIA-Steckanschlußbuchse auf, die mit einem PCMCIA-Steckplatz des Datenverarbeitungssystems eine mechanische und elektrische Kontaktierung bewirkt. Das Auslesen der Chipkarte erfolgt dabei über im Aufnahmekanal für die Chipkarte angeordnete Kontaktelemente, welche dieselbe berührend oder, beispielsweise auf optischem oder magnetischem Weg, berührungslos kontaktieren.

Ein Adapter zum Kontaktieren von Chipkarten ist beispielsweise aus der US 6,272,017 B1 bekannt. Der Adapter weist ein steckkartenförmiges Gehäuse mit einem an einer Stirnseite in einen Aufnahmekanal mündenden Einschubschlitz für die Aufnahme einer Chipkarte und einem an der gegenüberliegenden Stirnseite angeordneten Anschlußfeld auf. Mit dem Anschlußfeld ist eine Leiterplatte elektrisch verbunden, die sich parallel zum Aufnahmekanal erstreckt und mit Kontaktelementen zum Kontaktieren der Chipkarte versehen ist.

Aus der DE 295 05 678 U1 ist eine Kontaktiereinheit für kartenförmige Trägerelemente elektronischer Baugruppen bekannt, die mit einer Basisplatte mit einer zur planparallelen Aufnahme eines kartenförmigen Trägerelementes geeigneten Größe, wenigstens einer im wesentlichen parallel zur Basisplatte angeordneten Leiterplatte mit Kontaktelementen für die elektronischen Baugruppen des Trägerelementes an ihrer Oberfläche sowie mit einem an einer Kante der Basisplatte angeordneten Anschlußfeld versehen ist. Ein zur Basisplatte im wesentlichen deckungsgleiches, plattenförmiges Abdeckelement bildet mit der Leiterplatte einen schlitzartigen Einschubkanal und ist im Bereich des Anschlußfeldes und der dieser gegenüberliegenden Ecken an der Basisplatte befestigt. Die Leiterplatte füllt aufgrund der Befestigung in dem Gehäuse den vollen Bauraum im Gehäuse aus.

Die DE 295 05 678 U1 bildet den Oberbegriff des Patentanspruchs 1.

Der Erfindung liegt die Aufgabe zugrunde, einen Adapter zum Kontaktieren von Chipkarten, insbesondere mit einem nach PCMCIA-Standard genormten Anschluß eines Datenverarbeitungsgerätes oder dergleichen, der eingangs genannten Art, dahingehend weiterzubilden, daß die wirtschaftlichen Vorteile einer höheren Bauteilintegration seitens der Leiterplattenfertigung nutzbar sind, so daß sich eine einfache und kostengünstige Herstellung erreichen läßt, die eine wirtschaftliche Massenproduktion insbesondere im Hinblick auf die zunehmend umfangreichere Verwendung vorgeschriebener Kartensysteme gewährleistet.

Die Aufgabe ist bei einem Adapter der eingangs genannten Art erfindungsgemäß dadurch gelöst, daß die Leiterplatte in Erstreckungsrichtung des Aufnahmekanals eine gegenüber dem Aufnahmekanal verkürzte Länge aufweist und an der dem Einschubschlitz zugewandten Stirnseite mit einer Einrichtung zur Positionierung der Leiterplatte und zur Führung der Chipkarte in dem Aufnahmekanal versehen ist.

Der Erfindung, die in den Ansprüchen definiert ist, liegt die Erkenntnis zugrunde, daß die Leiterplattenfläche reduziert werden muß, um die wirtschaftlichen Vorteile der höheren Baüteilintegration nutzen zu können. Diese Reduzierung bringt nicht nur eine Einsparung an Leiterplatten-Basismaterial, sondern auch eine Nutzensteigerung bei der Leiterplattenfertigung. Durch die erfindungsgemäße Einrichtung zur Positionierung der Leiterplatte und zur Führung der Chipkarte in dem Aufnahmekanal wird gleichzeitig das sichere Kontaktieren einer in den Aufnahmekanal eingeschobenen Chipkarte gewährleistet, so daß die beiden Kostenvorteile, die Einsparung von Leiterplatten-Basismaterial einerseits und die Nutzensteigerung bei der Leiterplattenfertigung andererseits, nutzbar sind.

Ein solchermaßen ausgestalteter Adapter läßt sich einfach und kostengünstig herstellen und gestattet daher eine Massenproduktion im zuvor erwähnten Sinn. Dies ist darauf zurückzuführen, daß die vorteilhafterweise die Leiterplatte schwimmend einklemmende Einrichtung zum einen eine sichere Positionierung der verkürzten Leiterplatte in dem Aufnahmekanal des Gehäuses des Adapters und zum andern eine sichere Führung und Kontaktierung der Chipkarte in dem Aufnahmekanal des Gehäuses des Adapters zwischen Leiterplatte und oberer Abdeckplatte des Gehäuses des Adapters gewährleistet.

Aus der US 5,846,092 ist ein Adapter für Speicherkarten bekannt, dessen steckkartenförmiges Gehäuse auf der einen Stirnseite einen Einschubschlitz zur Aufnahme einer Speicherkarte und auf der entgegengesetzten Stirnseite ein Anschlußfeld aufweist, das mit einer in dem Gehäuse angeordneten Leiterplatte elektrisch verbunden ist. Die Leiterplatte ist bei dem bekannten Adapter zwar kürzer ausgebildet als die Gesamtlänge des Gehäuses, jedoch wird die Speicherkarte nicht - wie bei der Erfindung - über bzw. unter die Leiterplatte geschoben, so daß sich die Kontaktfelder der Speicherkarte und der Leiterplatte flächig gegenüberliegen, sondern der Aufnahmekanal des Gehäuses ist derart angeordnet, daß die auszulesende Speicherkarte stimseitig zur Leiterplatte hingeführt und über Kontaktstifte ebenfalls stirnseitig kontaktiert wird.

In einer bevorzugten Ausführungsform weist die Einrichtung zur Positionierung der Leiterplatte armförmige Tragelemente und armförmige Federelemente mit einem festen Ende und einem freien Ende auf, wobei die freien Enden der Tragelemente und der Federelemente auf einander gegenüber liegenden Seiten der Leiterplatte sich in Richtung des Anschlußfeldes erstrecken. Die armförmigen Tragelemente und Federelemente stellen so Funktionselemente für die Chipkartenführung und die Leiterplattenaufnahme bereit. Die Leiterplatte wird dabei zwischen den armförmigen Tragelementen und den armförmigen Federelementen schwimmend eingeklemmt. Dadurch, daß die Einrichtung mit der Leiterplatte direkt verbunden wird, ist die Leiterplattenlänge in Abhängigkeit der Anwendung ohne Änderungen an dem Gehäuse des Adapters oder des Aufnahmekanals variabel montierbar. Vorteilhafterweise werden anstelle von für PCMCIA-Adapter üblichen

Leiterplattenlängen von etwa 75mm, entsprechend einer vollen Leiterplattenlänge, Leiterplatten mit einer Länge von bis zu 40mm verwendet.

Vorteilhafterweise weisen die armförmigen Federelemente nockenförmige Rastmittel auf, welche in dazu korrespondierende an den Seiten der Leiterplatte vorgesehene Aufnahmen eingreifen. Die nockenförmigen Rastmittel sind vorteilhaft am freien Ende des Federelements angeordnet und die Aufnahmen sind in der Leiterplatte ausgebildete Löcher, vorzugsweise Fanglöcher, oder in der Leiterplatte ausgebildete Vertiefungen. Die Rastmittel gewährleisten eine sichere Verbindung zwischen der Leiterplatte und der Einrichtung.

In einer weiteren vorteilhaften Ausgestaltung der Erfindung weisen die Federelemente Führungs- und/oder Anschlagsmittel zur Positionierung der Leiterplatte an der Einrichtung auf. Vorteilhafterweise sind die Führungsmittel als an den Federelementen angeordnete Laschen ausgebildet, welche mit den Längsseiten der Leiterplatte fluchten.

In einer konkreten Ausgestaltung der Erfindung weist die Einrichtung zwei Tragelemente und zwei Federelemente auf, welche in Erstreckungsrichtung des Aufnahmekanals parallel und mit Abstand zueinander verlaufen und senkrecht zur Erstreckungsrichtung des Aufnahmekanals voneinander beabstandet sind. Vorteilhafterweise sind die Tragelemente und die Federelemente symmetrisch zur Stirnseite angeordnet, vorzugsweise derart, daß die Federelemente außen und die Tragelemente innen liegen, besonders bevorzugt derart, daß die Tragelemente links und rechts von den Kontaktelementen der Leiterplatte positionierbar sind.

In einer weiteren vorteilhaften Ausgestaltung der Erfindung weisen die Arme der Federelemente in Erstreckungsrichtung des Aufnahmekanals eine zur Führung der Chipkarte dienende Auskragung auf.

In einer weiteren Ausgestaltung der Erfindung weist die Einrichtung zur weiteren Führung der Chipkarte armförmige Federelemente auf, welche sich in Richtung des Anschlußfeldes erstrecken und über der Leiterplatte bis zu den Kontaktelementen aufgestellt sind. Vorteilhafterweise weist die Einrichtung des weiteren zwischen den Federelementen vorzugsweise mittig der Stirnseite der Leiterplatte, einen sich in Richtung des Anschlußfeldes erstreckenden rampenförmigen Vorsprung auf, welcher sich auf der den Tragelementen gegenüber liegenden Seite der Leiterplatte bis zu den Kontaktelementen der Leiterplatte erstreckt. Der rampenförmige Vorsprung eilt vorteilhaft hinsichtlich eines Berührungskontaktes mit der Chipkarte bei der Führung der Chipkarte der Auskragung der Rastmittel aufweisenden Federelemente nach.

Eine weitere Ausgestaltung .der Erfindung sieht vor, daß die vorteilhafterweise aus Kunststoff bestehende Einrichtung einteilig ausgebildet ist, vorzugsweise als Kunststoff-Spritzgußteil.

Weitere Einzelheiten, Merkmale und Vorteile der Erfindung werden nachfolgend anhand der in den Figuren dargestellten Ausführungsbeispiele näher erläutert. Dabei zeigen:
- Figur 1: in einer perspektivischen Ansicht einen Adapter und eine Chipkarte;
- Figur 2: in einer perspektivischen Ansicht den Adapter gemäß Fig. 1 mit abgehobener oberer Abdeckplatte;
- Figur 3: in einer perspektivischen Ansicht eine Einrichtung zur Positionierung der Leiterplatte und zur Führung der Chipkarte in dem Aufnahmekanal des Adapters;
- Figur 4: eine weitere perspektivische Ansicht der Einrichtung zur Positionierung der Leiterplatte und zur Führung der Chipkarte in dem Aufnahmekanal des Adapters;
- Figur 5: eine Ansicht von oben auf die Einrichtung zur Positionierung der Leiterplatte und zur Führung der Chipkarte in dem Aufnahmekanal gemäß den Figuren 3 und 4;
- Figur 6: eine Seitenansicht der Einrichtung zur Positionierung der Leiterplatte und zur Führung der Chipkarte in dem Aufnahmekanal;
- Figur 7: eine Ansicht von unten auf die Einrichtung zur Positionierung der Leiterplatte und zur Führung der Chipkarte in dem Aufnahmekanal des Adapters;
- Figur 8: eine perspektivische Ansicht von oben auf eine mit der Einrichtung zur Positionierung der Leiterplatte und zur Führung der Chipkarte in dem Aufnahmekanal des Adapters versehene Leiterplatte;
- Figur 9: eine perspektivische Ansicht von unten auf eine mit der Einrichtung zur Positionierung der Leiterplatte und zur Führung der Chipkarte in dem Aufnahmekanal des Adapters versehene Leiterplatte und
- Figur 10: eine Seitenansicht einer mit der Einrichtung zur Positionierung der Leiterplatte und zur Führung der Chipkarte in dem Aufnahmekanal des Adpaters versehene Leiterplatte.

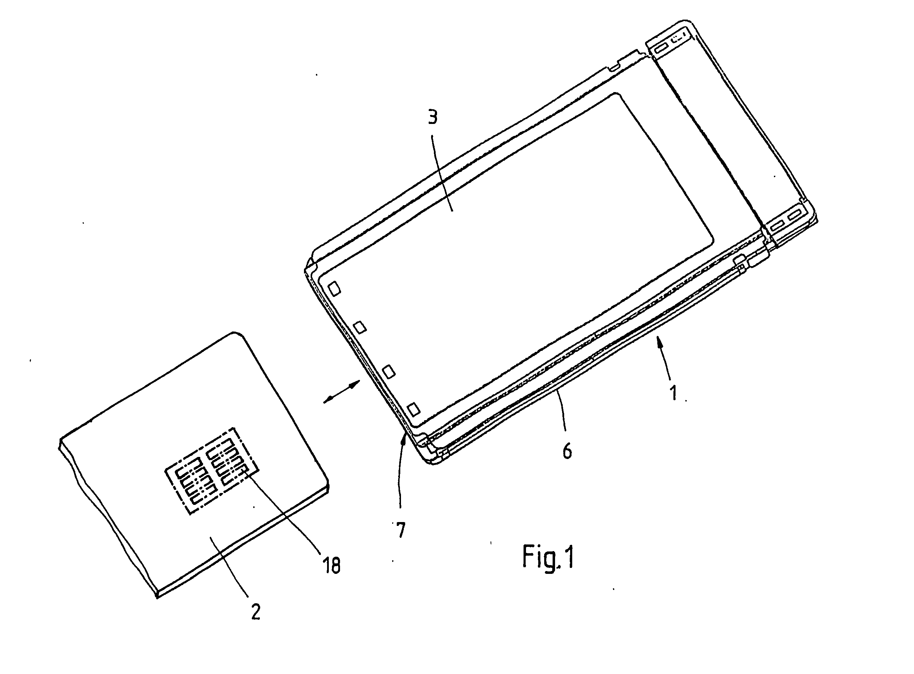

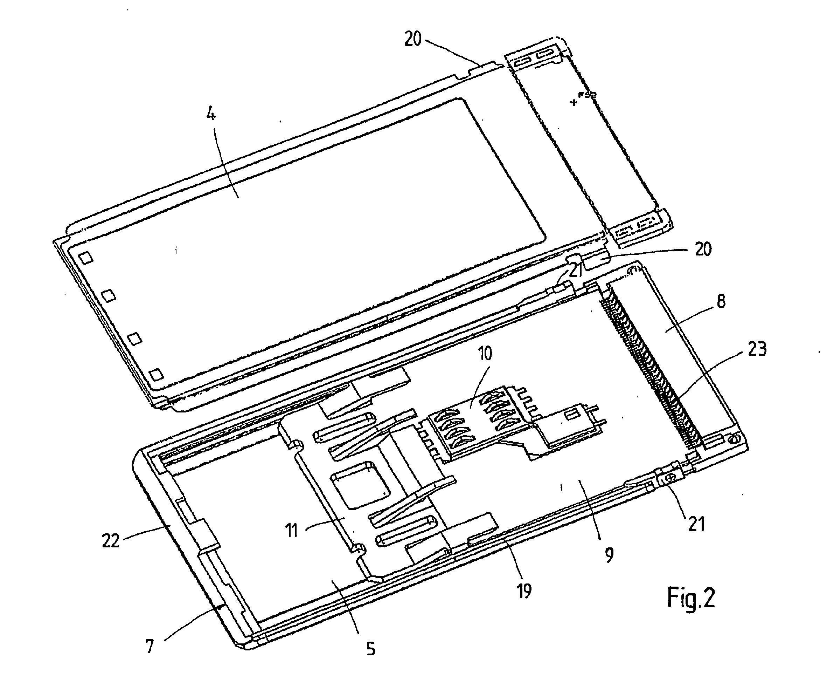

Der in Figur 1 dargestellte Adapter 1 weist ein Gehäuse auf, dessen Abmessungen denen einer PCMCIA-Steckkarte vom Typ II entsprechen. Das Gehäuse 3 des Adapters 1 ist an der in Figur 1 rechts gelegenen Stirnseite mit einem PCMCIA-Anschlußfeld 8 versehen, welches wie aus Figur 2 ersichtlich - vollkommen im Gehäuse 3 untergebracht ist. Das Gehäuse 3 weist an der dem Anschlußfeld 8 gegenüber liegenden Stirnseite einen Einschubschlitz 7 für eine Chipkarte 2 auf, der in einen seitlich offenen Aufnahmekanal 6 übergeht. Die Chipkarte 2 ist mit einem flächigen Kontaktfeld 18 versehen und läßt sich in Richtung des gezeigten Doppelpfeiles in das Gehäuse 3 des Adapters 1 einführen bzw. herausziehen.

Wie aus Figur 2 ersichtlich ist, besteht das Gehäuse 3 des Adapters 1 aus einer oberen Abdeckplatte 4 und einer unteren Abdeckplatte 5, die durch ein rahmenförmiges Zwischenelement 19 miteinander verbunden sind. Die als Blechstanzteile gefertigten Abdeckplatten 4 und 5 weisen orthogonal abgewinkelte Krampen 20 und 21 auf, die eine einfache aber dennoch belastbare Verbindung der Abdeckplatten 4 und 5 mit dem Zwischenelement 19, welches mehrteilig ausgebildet sein kann, trotz Unterschiedlicher Materialien sicherstellt. Das an der unteren Abdeckplatte angeordnete Zwischenelement 19 ist als ein im wesentlichen U-förmiger Rahmen ausgebildet, dessen Schenkel an ihrer Innenkontur Klemm-und Führungsabschnitte zur Aufnahme der Leiterplatte 9 und der Einrichtung 11 aufweisen. Zum besseren Einführen der Chipkarte 2 weist das Zwischenelement 19 im Bereich des Einschubschlitzes 7 eine stimseitige Einlaufschräge 22 auf, die ein leichtes Einführen der Chipkarte 2 in den Aufnahmekanal 6 des Adapters ermöglicht. Durch die rahmenartige Ausgestaltung des Zwischenelements 19 ist eine hohe Verbindungssteifigkeit des Gehäuses 3 des Adapters 1 gewährleistet.

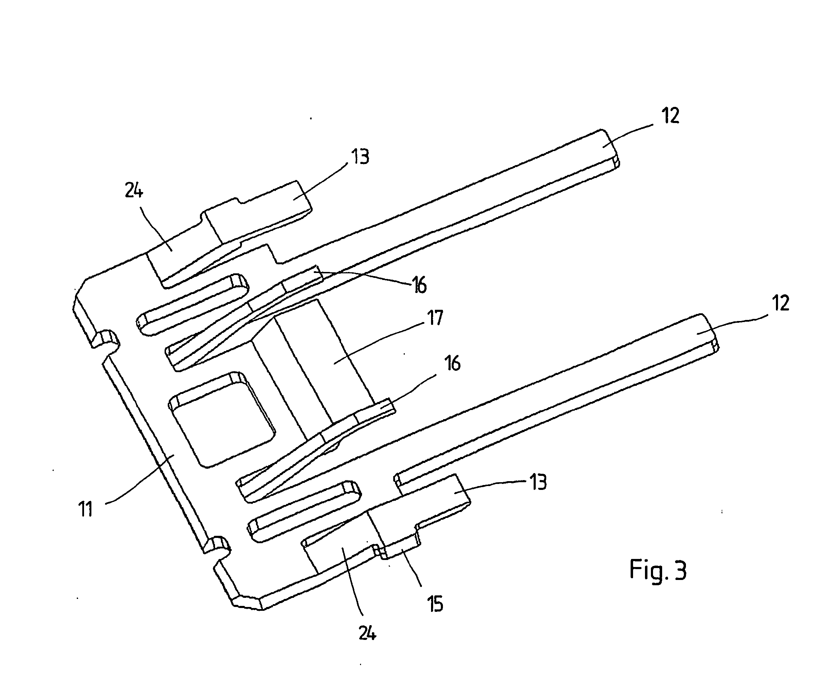

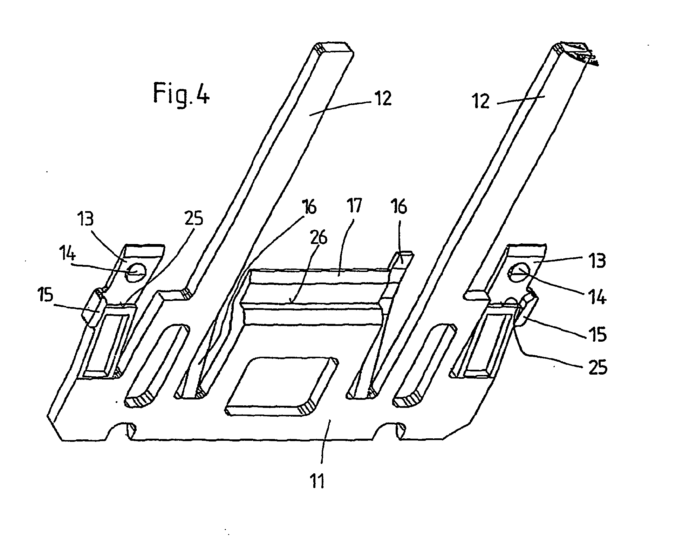

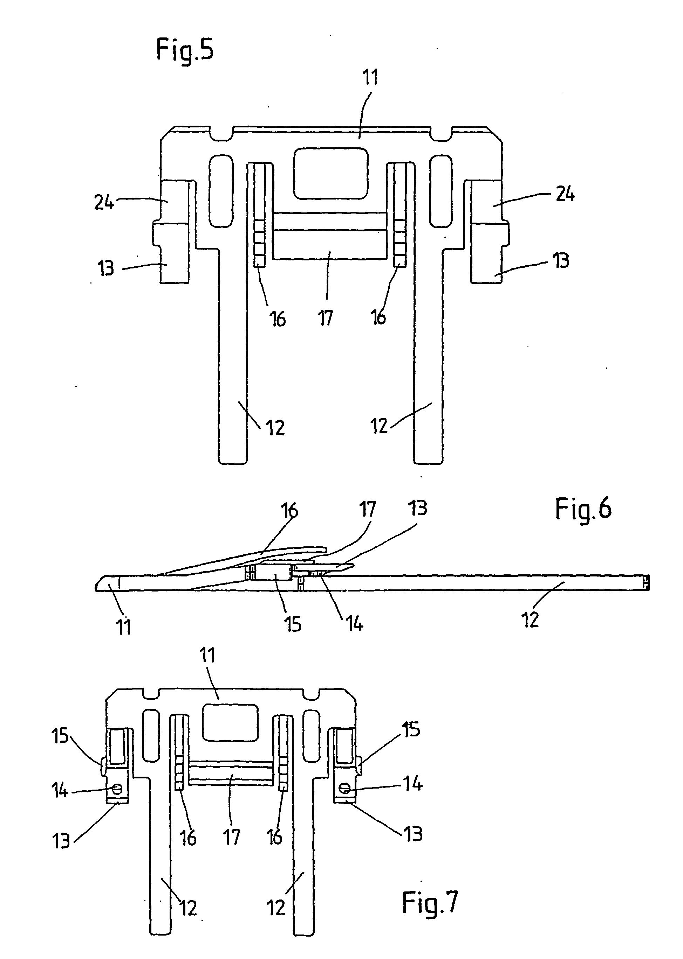

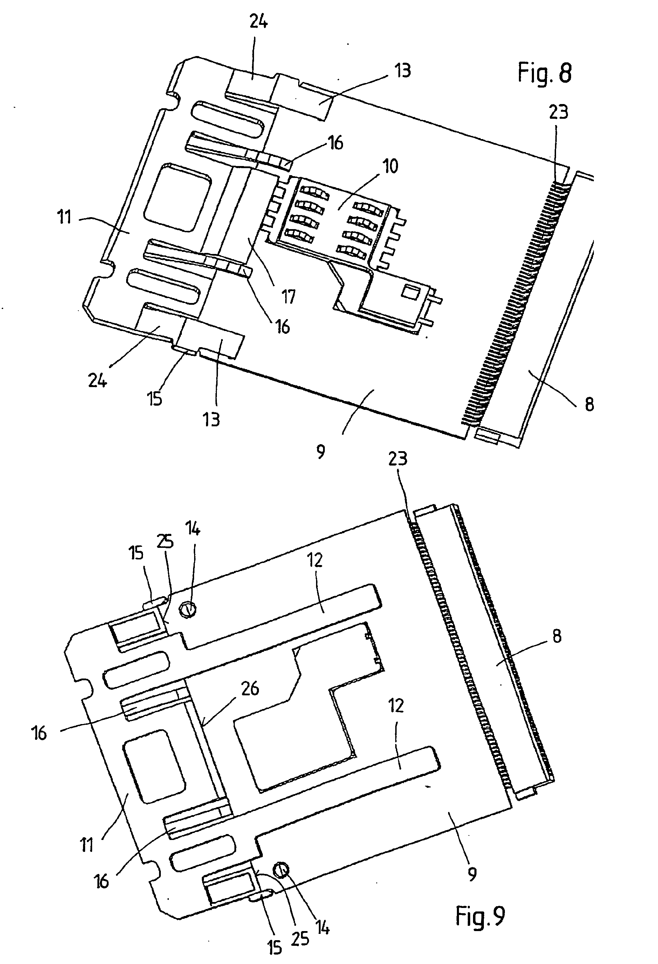

Die Leiterplatte 9 weist eine in Erstreckungsrichtung des Aufnahmekanals 6 gegenüber dem Aufnahmekanal 6 verkürzte Länge auf und ist an der dem Einschubschlitz 7 zugewandten Stirnseite mit einer Einrichtung 11 zur Positionierung der Leiterplatte 9 und zur Führung der Chipkarte 2 in dem Aufnahmekanal 6 versehen, wobei die Einrichtung 11 die Leiterplatte 9 schwimmend einklemmt Wie in den Figuren 3 bis 10 dargestellt, weist die aus Kunststoff gefertigte Einrichtung 11 zur Positionierung der Leiterplatte 9 zwei armförmige Tragelemente 12 und zwei armförmige Federelemente 13 mit einem festen Ende und einem freien Ende auf, welche in Erstreckungsrichtung des Aufnahmekanals 6 parallel verlaufen und senkrecht zur Erstreckungsrichtung des Aufnahmekanals 6 von einander beabstandet sind. Die freien Enden der Tragelemente 12 und der Federelemente 13 erstrecken sich dabei auf einander gegenüber liegenden Seiten der Leiterplatte 9 in Richtung des Anschlußfeldes 8, welches mit der Leiterplatte 9 über Kontaktelemente 23 elektrisch und mechanisch verbunden ist. Durch die schwimmende Aufnahme der Leiterplatte 9 über die Einrichtung 11 ist die Leiterplattenlänge variabel gestaltbar. Durch Variation der Dicke der Tragelemente 12 in Erstreckungsrichtung des Aufnahmekanals ist eine Höhenanpassung zur Positionierung der Leiterplatte im Aufnahmekanal 6 gegeben, so daß eine Anpassung an unterschiedlich dicke Leiterplatten mit der Einrichtung 11 zur Positionierung im Aufnahmekanal 6 des Adapters 1 gegeben ist. Die Federelemente 13 weisen, wie in Figur 4 und 7 gezeigt, im Bereich ihres freien Endes Nocken 14 auf, welche in korrespondierende Löcher der verkürzten Leiterplatte 9 eingreifen, wie in Figur 9 zu erkennen. Weiter weisen die Federelemente 13 zur Positionierung der Leiterplatte laschenartige Führungsmittel 15 auf, welche mit den Längsseiten der Leiterplatte 9 fluchten, wie insbesondere anhand von Figur 9 zu erkennen. Die in ihrer Länge gegenüber dem Aufnahmekanal 6 verkürzte Leiterplatte 9 wird zwischen den symmetrisch zur Stirnseite angordneten Tragelementen 12 und Federelementen 13 schwimmend eingeklemmt, wobei die Tragelemente 12 auf der einen und die Federelemente 13 auf der gegenüber liegenden Seite der Leiterplatte 9 zu liegen kommen, wie anhand der Figuren 8, 9 und 10 zu erkennen. Die Federelemente 13 sind dabei links und rechts von den Kontaktelementen 10 zum Kontaktieren des Kontaktfeldes 18 einer Chipkarte 2 positioniert. Die so schwimmend zwischen den Tragelementen 12 und den mit Nocken 14 als Rastmittel versehenen Federelementen 13 schwimmend eingehängte Leiterplatte kann mit Hilfe der Einrichtung 11 Lagetoleranzen innerhalb der Leiterplattenaufnahme ausgleichen.

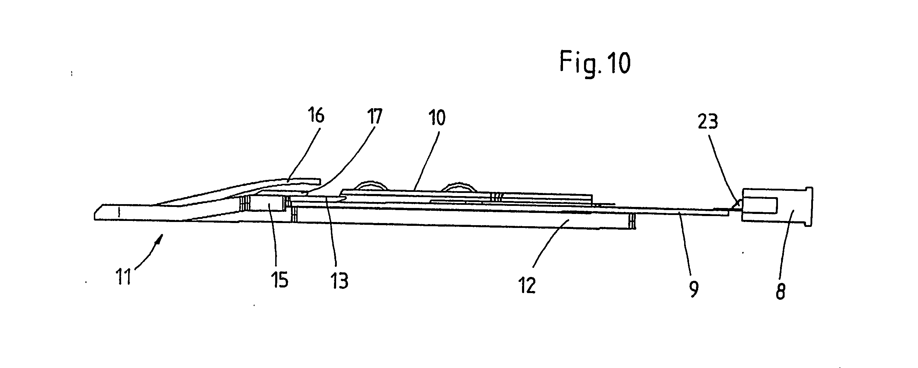

Die Einrichtung 11 weist zur Führung der Chipkarte 2 armförmige Federelemente 16 auf, welche sich in Richtung des Anschlußfeldes 8 auf der den Tragelementen 12 gegenüber liegenden Seite erstrecken und über der Leiterplatte 9 bis zu den Kontaktelementen 10 aufgestellt sind, wie in Figur 8 und 10 dargestellt. Die Federelemente 16 sind dabei symmetrisch zur Stirnseite der Leiterplatte angeordnet. Weiter weist die Einrichtung 11 zwischen den Federelementen 16 mittig der Stirnseite der Leiterplatte 9 einen sich in Richtung des Anschlußfeldes 8 erstreckenden rampenförmigen Vorsprung 17 auf, welcher sich auf der den Tragelementen 12 gegenüber liegenden Seite der Leiterplatte 9 bis zu den Kontaktelementen 10 der Leiterplatte 9 erstreckt. Der rampenartige Vorsprung 17 und die Auskragung 24 der Federelemente 13 sind hinsichtlich eines Berührungskontaktes mit der Chipkarte 2 bei der Führung der Chipkarte 2 beim Einführen der Chipkarte 2 in den Aufnahmekanal 6 derart aufeinander abgestimmt, daß der rampenartige Vorsprung 17 der Auskragung 24 der Federelemente 13 nacheilt. Die Auskragung 24 der Federelemente 13 ihrerseits ist hinsichtlich eines Berührungskontaktes mit der Chipkarte 2 der Aufstellung der Federelemente 16 nacheilend ausgebildet.

Wie anhand von Figur 8 und 9 zu erkennen, weisen der Vorsprung 17 und die Federelemente 15 eine Anlagefläche 25 bzw. 26 für die Stirnseite der Leiterplatte 9 auf, welche zur definierten Positionierung der Leiterplatte 9 an der Einrichtung 11 dienen.

Die in den Figuren dargestellten Ausführungsbeispiele dienen lediglich der Erläuterung der Erfindung und sind für diese nicht beschränkend.

### Bezugszeichenliste:

- 1: Adapter
- 2: Chipkarte
- 3: Gehäuse
- 4: obere Abdeckplatte
- 5: untere Abdeckplatte
- 6: Aufnahmekanal
- 7: Einschubschlitz
- 8: Anschlußfeld
- 9: Leiterplatte
- 10: Kontaktelemente
- 11: Positionier- und Führungseinrichtung
- 12: Tragelement
- 13: Federelement
- 14: Rastmittel (Nocken)
- 15: Führungsmittel,
- 16: Federelement
- 17: Vorsprung (Rampe)
- 18: Kontaktfeld
- 19: Zwischenelement
- 20: Krampen
- 21: Krampen
- 22: Einlaufschräge
- 23: Kontaktelemente
- 24: Auskragung
- 25: Anlagefläche
- 26: Anlagefläche

## Patentansprüche

1. Adapter (1) zum Kontaktieren von Chipkarten (2), mit
- einem steckkartenförmigen Gehäuse (3), welches einen an einer Stirnseite in einen Aufnahmekanal (6) mündenden Einschubschlitz (7) für die Aufnahme einer Chipkarte (2) und ein an der gegenüberliegenden Stirnseite angeordnetes Anschlußfeld (8) aufweist, und mit
- einer mit dem Anschlußfeld (8) elektrisch verbundenen Leiterplatte (9), welche sich parallel zum Aufnahmekanal (6) erstreckt und mit Kontaktelementen (10) zum Kontaktieren der Chipkarte (2) versehen ist,
**dadurch gekennzeichnet, daß**
die Leiterplatte (9) in Erstreckungsrichtung des Aufnahmekanals (6) kürzer ist als der Aufnahmekanal (6) und an der dem Einschubschlitz (7) zugewandten Stirnseite mit einer Einrichtung (11) zur Positionierung der Leiterplatte (9) und zur Führung der Chipkarte (2) in dem Aufnahmekanal (6) versehen ist.

2. Adapter nach Anspruch 1, **dadurch gekennzeichnet, daß** die Einrichtung (11) die Leiterplatte (9) mit Spiel einklemmt.

3. Adapter nach Anspruch 1 oder Anspruch 2, **dadurch gekennzeichnet, daß** die Einrichtung (11) zur Positionierung der Leiterplatte (9) armförmige Tragelemente (12) und armförmige Federelemente (13) mit einem festen Ende und einem freien Ende aufweist, wobei die freien Enden der Tragelemente (12) .und der Federelemente (13) auf einander gegenüberliegenden Seiten der Leiterplatte (9) sich in Richtung des Anschlußfeldes (8) erstrecken.

4. Adapter nach Anspruch 3, **dadurch gekennzeichnet, daß** die Federelemente (13) nockenförmige Rastmittel (14) aufweisen, welche in dazu korrespondierende auf der Leiterplatte (9) vorgesehene Aufnahmen eingreifen.

5. Adapter nach Anspruch 4, **dadurch gekennzeichnet, daß** die Rastmittel (14) am freien Ende des Federelements (13) angeordnet sind.

6. Adapter nach Anspruch 4 oder Anspruch 5, **dadurch gekennzeichnet, daß** die Aufnahmen in der Leiterplatte (9) ausgebildete Löcher, vorzugsweise Fanglöcher, sind.

7. Adapter nach Anspruch 4 oder Anspruch 5, **dadurch gekennzeichnet, daß** die Aufnahmen in der Leiterplatte (9) ausgebildete Vertiefungen sind.

8. Adapter nach einem der Ansprüche 3 bis 7, **dadurch gekennzeichnet, daß** die Federelemente (13) Führungsmittel (15) zur Positionierung der Leiterplatte (9) an der Einrichtung (11) aufweisen.

9. Adapter nach einem der Ansprüche 3 bis 8, **dadurch gekennzeichnet, daß** die Einrichtung (11) zwei Tragelemente (12) und zwei Federelemente (13) aufweist, welche in Aufnahmekanalerstreckungsrichtung vorzugsweise parallel zueinander und mit Abstand zueinander verlaufen und senkrecht zur Aufnahmekanalerstreckungsrichtung voneinander beabstandet sind.

10. Adapter nach Anspruch 9, **dadurch gekennzeichnet, daß** die Tragelemente (12) und die Federelemente (13) symmetrisch zur Stirnseite angeordnet sind, vorzugsweise derart, daß die Federelemente (13) außen und die Tragelemente (12) innen liegen, besonders bevorzugt derart, daß die Tragelemente (12) links und rechts von den Kontaktelementen (10) der Leiterplatte (9) positionierbar sind.

11. Adapter nach einem der Ansprüche 3 bis 10, **dadurch gekennzeichnet, daß** der Arm der Federelemente (13) in Aufnahmekanalerstreckungsrichtung eine zur Führung der Chipkarte (2) dienende Auskragung (24) aufweist.

12. Adapter nach einem der Ansprüche 1 bis 11, **dadurch gekennzeichnet, daß** die Einrichtung (11) zur Führung der Chipkarte (2) armförmige Federelemente (16) aufweist, welche sich in Richtung des Anschlußfeldes (8) erstrecken und über der Leiterplatte (9) bis zu den Kontaktelementen (10) aufgestellt sind.

13. Adapter nach Anspruch 12, **dadurch gekennzeichnet, daß** die Einrichtung (11) zwischen den Federelementen (16), vorzugsweise mittig der Stirnseite der Leiterplatte (9), einen sich in Richtung des Anschlußfeldes (8) erstreckenden rampenartigen Vorsprung (17) aufweist, welcher sich auf der den Tragelementen (12) gegenüberliegenden Seite der Leiterplatte (9) bis zu den Kontaktelementen (10) der Leiterplatte (9) erstreckt.

14. Adapter nach Anspruch 13, **dadurch gekennzeichnet, daß** der rampenartige Vorsprung (17) hinsichtlich eines Kontaktes mit der Chipkarte (2) bei der Führung der Chipkarte (2) der Auskragung (24) und der Aufstellung der Federelemente (16) nacheilt.

15. Adapter nach einem der Ansprüche 1 bis 14, **dadurch gekennzeichnet, daß** die Einrichtung (11) einteilig ausgebildet ist.

16. Adapter nach einem der Ansprüche 1 bis 15, **dadurch gekennzeichnet, daß** die Einrichtung (11) aus Kunststoff ist, vorzugsweise ein Kunststoff-Spritzgußteil.

## Claims

1. Adapter (1) for contacting chip cards (2), with
- a housing (3) in the shape of a slot-in card which has on one end face an insertion slot (7) which opens into a receiving channel (6) to receive a chip card (2) and has a connection field (8) disposed on the opposite end face, and with
- a circuit board (9) which is electrically connected to the connection field (8), extends parallel to the receiving channel (6) and is provided with contact elements (10) for contacting the chip card (2),
**characterised in that**
the circuit board (9) is shorter than the receiving channel (6) in the direction in which the receiving channel (6) extends and is provided on the end face facing the insertion slot (7) with a device (11) for positioning the circuit board (9) and for guiding the chip card (2) in the receiving channel (6).

2. Adapter as claimed in Claim 1, **characterised in that** the device (11) clamps the circuit board (9) with play.

3. Adapter as claimed in Claim 1 or Claim 2, **characterised in that** the device (11) for positioning the circuit board (9) has arm-like support elements (12) and arm-like spring elements (13) with a fixed end and a free end, wherein the free ends of the support elements (12) and of the spring elements (13) extend in the direction of the connection field (6) on sides of the circuit board (9) which lie opposite one another.

4. Adapter as claimed in Claim 3, **characterised in that** the spring elements (13) have cam-like locking means (14) which engage in corresponding receptacles provided on the circuit board (9).

5. Adapter as claimed in Claim 4, **characterised in that** the locking means (14) are disposed on the free end of the spring element (13).

6. Adapter as claimed in Claim 4 or Claim 5, **characterised in that** the receptacles are holes, preferably indexing holes, constructed in the circuit board (9).

7. Adapter as claimed in Claim 4 or Claim 5, **characterised in that** the receptacles are recesses constructed in the circuit board (9).

8. Adapter as claimed in any one of Claims 3 to 7, **characterised in that** the spring elements (13) have guide means (15) for positioning the circuit board (9) on the device (11).

9. Adapter as claimed in any one of Claims 3 to 8, **characterised in that** the device (11) has two support elements (12) and two spring elements (13) which extend in the direction in which the receiving channel extends preferably parallel to one another and spaced from one another and are spaced from one another perpendicular to the direction in which the receiving channel extends.

10. Adapter as claimed in Claim 9, **characterised in that** the support elements (12) and the spring elements (13) are disposed symmetrically with respect to the end face, preferably in such a way that the spring elements (13) lie on the outside and the support elements (12) lie inside, and particularly preferably in such a way that the support element (12) can be positioned to the left and right of the contact elements (10) of the circuit board (9).

11. Adapter as claimed in any one of Claims 3 to 10, **characterised in that** the arm of the spring elements (13) has a projection (24) which serves for guiding the chip card (2) in the direction in which the receiving channel extends.

12. Adapter as claimed in any one of Claims 1 to 11, **characterised in that** the device (11) for guiding the chip card (2) has arm-like spring elements (16) which extend in the direction of the connection field (8) and are set up over the circuit board (9) up to the contact elements (10).

13. Adapter as claimed in Claim 12, **characterised in that** the device (11) has between the spring elements (16), preferably in the centre of the end face of the circuit board (9), a ramp-like projection (17) which extends in the direction of the connection field (8) and extends as far as the contact elements (10) of the circuit board (9) on the side of the circuit board (9) lying opposite the support elements (12).

14. Adapter as claimed in Claim 13, **characterised in that** the ramp-like projection (17) trails behind the projection (2) and the assembly of the spring elements (16) with respect to a contact with the chip card (2) during guiding of the chip card (2).

15. Adapter as claimed in any one of Claims 1 to 14, **characterised in that** the device (11) is constructed in one piece.

16. Adapter as claimed in any one of Claims 1 to 15, **characterised in that** the device (11) is made from plastics material, preferably an injection moulded plastics part.

## Revendications

1. Adaptateur (1) pour la mise en contact de cartes à puce (2), avec
- un boîtier (3) en forme de carte à insérer, qui possède sur une face d'extrémité une fente d'insertion (7) débouchant dans un canal de réception (6) pour recevoir une carte à puce (2) ainsi qu'un champ de connexion (8) disposé sur la face d'extrémité opposée, et avec
- une carte de circuits (9) connectée électriquement au champ de connexion (8), qui s'étend parallèlement au canal de réception (6) et qui est pourvue d'éléments de contact (10) pour la mise en contact de la carte à puce (2),
**caractérisé en ce que** la carte de circuits (9) est plus courte que le canal de réception (6) dans le sens de l'étendue du canal de réception (6) et possède sur sa face d'extrémité tournée vers la fente d'insertion (7) un dispositif (11) pour positionner la carte de circuits (9) et pour guider la carte à puce (2) dans le canal de réception (6).

2. Adaptateur selon la revendication 1, **caractérisé en ce que** le dispositif (11) serre la carte de circuits (9) avec un jeu.

3. Adaptateur selon la revendication 1 ou la revendication 2, **caractérisé en ce que** le dispositif (11) pour positionner la carte de circuits (9) possède des éléments portants (12) en forme de bras et des éléments élastiques (13) en forme de bras avec une extrémité fixe et une extrémité libre, les extrémités libres des éléments portants (12) et des éléments élastiques (13) s'étendant en direction du champ de connexion (8) sur des faces opposées de la carte de circuits (9).

4. Adaptateur selon la revendication 3, **caractérisé en ce que** les éléments élastiques (13) présentent des moyens d'engagement (14) en forme de cames, qui se mettent en prise dans des réceptacles correspondants sur la carte de circuits (9).

5. Adaptateur selon la revendication 4, **caractérisé en ce que** les moyens d'engagement (14) sont disposés à l'extrémité libre de l'élément élastique (13).

6. Adaptateur selon la revendication 4 ou 5, **caractérisé en ce que** les réceptacles sont des trous formés dans la carte de circuits (9), de préférence des trous de positionnement.

7. Adaptateur selon la revendication 4 ou 5, **caractérisé en ce que** les réceptacles sont des renfoncements formés dans la carte de circuits (9).

8. Adaptateur selon l'une quelconque des revendications 3 à 7, **caractérisé en ce que** les éléments élastiques (13) possèdent des moyens de guidage (15) pour positionner la carte de circuits (9) sur le dispositif (11).

9. Adaptateur selon l'une quelconque des revendications 3 à 8, **caractérisé en ce que** le dispositif (11) possède deux éléments portants (12) et deux éléments élastiques (13), qui sont de préférence parallèles l'un à l'autre dans le sens de l'extension du canal de réception et distants l'un de l'autre et qui sont écartés l'un de l'autre perpendiculairement au sens de l'extension du canal de réception.

10. Adaptateur selon la revendication 9, **caractérisé en ce que** les éléments portants (12) et les éléments élastiques (13) sont disposés de façon symétrique par rapport à la face d'extrémité, de préférence de telle manière que les éléments élastiques (13) se trouvent sur l'extérieur et les éléments portants (12) sur l'intérieur, et notamment de telle manière que les éléments portants (12) puissent être positionnés à gauche et à droite des éléments de contact (10) de la carte de circuits (9).

11. Adaptateur selon l'une quelconque des revendications 3 à 10, **caractérisé en ce que** le bras des éléments élastiques (13) possède dans le sens de l'extension du canal de réception une échancrure (24) servant au guidage de la carte à puce (2).

12. Adaptateur selon l'une quelconque des revendications 1 à 11, **caractérisé en ce que** le dispositif (11) pour le guidage de la carte à puce (2) possède des éléments élastiques en forme de bras (16), qui s'étendent en direction du champ de connexion (8) et sont posés sur la carte de circuits (9) jusqu'aux éléments de contact (10).

13. Adaptateur selon la revendication 12, **caractérisé en ce que** le dispositif (11) présente entre les éléments élastiques (16), de préférence au milieu de la face d'extrémité de la carte de circuits (9), une saillie en forme de rampe (17) s'étendant en direction du champ de connexion (8), qui s'étend du côté de la carte de circuits (9) faisant face aux éléments portants (12) jusqu'aux éléments de contact (10) de la carte de circuits (9).

14. Adaptateur selon la revendication 13, **caractérisé en ce que** la saillie en forme de rampe (17) suit l'échancrure (24) et la disposition des éléments élastiques (16) lors du guidage de la carte à puce (2) en vue d'un contact avec la carte à puce (2).

15. Adaptateur selon l'une quelconque des revendications 1 à 14, **caractérisé en ce que** le dispositif (11) est formé d'un seul tenant.

16. Adaptateur selon l'une quelconque des revendications 1 à 15, **caractérisé en ce que** le dispositif (11) est fait de plastique, de préférence d'une pièce en plastique moulé par injection.
